# EUROPÄISCHE PATENTSCHRIFT

(11) **EP 2 721 975 B1**
(45) Veröffentlichungstag und Bekanntmachung des Hinweises auf die Patenterteilung: **04.03.2015**
(21) Anmeldenummer: 12401210.5
(22) Anmeldetag: 17.10.2012
(51) Int. Cl.: A47J 31/44

(54) **Getränkebereiter**
Beverage preparation machine
Préparateur de boissons

(43) Veröffentlichungstag der Anmeldung: 23.04.2014
(73) Patentinhaber: Miele & Cie. KG, 33332 Gütersloh (DE)
(72) Erfinder: Rütten, Felix, 33615 Bielefeld (DE); Wüstefeld, Michael, 59555 Lippstadt (DE)

(56) Entgegenhaltungen:
- EP-A1- 0 404 688
- WO-A2-2006/084819
- CN-U- 202 287 829
- US-A1- 2010 242 740

## Beschreibung

Die Erfindung betrifft einen Getränkebereiter nach dem Oberbegriff des Patentanspruches 1.

Derartige Getränkebereiter sind beispielsweise in Form eines Standgerätes als Kaffeeautomaten in vielfältigen Ausführungsvarianten im Einsatz. Unter einem "Standgerät" wird dabei ein frei stehendes Einzelgerät verstanden, dass folglich nicht in einen Schrank eingebaut ist. Das Gehäuse derartiger Getränkebereiter besteht unter anderem aus einer Vielzahl einzelner Verkleidungsteile, die aus gestalterischen Gründen mit einer farbigen Lackoberfläche versehen sind oder insgesamt aus einem farbigen Kunststoff bestehen können. Es ist vorstellbar, dass dem Gehäuse eine wesentliche gestalterische Bedeutung für den Getränkebereiter zukommt, weshalb Öffnungen oder Unterbrechungen in den Verkleidungsteilen unerwünscht sind und weitgehend vermieden werden sollten. Da ein Getränkebereiter der hier betroffenen Art zur Zubereitung von Getränken auf Wasserbasis dient, muss ein Wasservorrat bereitgestellt werden. Zu diesem Zweck dient ein Wassertank, der zu seiner Befüllung, Entleerung und/oder Reinigung aus dem Getränkebereiter entnommen werden kann. Insbesondere bei den eingangs bereits erwähnten Standgeräten erfolgt das Einsetzen und Entnehmen des Wassertanks von der Außenseite des Getränkebereiters her. Um das Eindringen von Verunreinigungen in den Wassertank zu vermeiden, verfügt dieser an seiner Oberseite zudem über einen schwenkbar angeordneten Deckel, der folglich zumindest optischer Bestandteil eines der erwähnten Verkleidungsteile ist. Nach dem Öffnen des Deckels kann bei den bisher im Einsatz befindlichen Getränkebereitern ein in dem Wassertank schwenkbar gelagerter Griff erfasst und anschließend der Wassertank aus dem Getränkebereiter herausgezogen werden. Neben dem Umstand, dass hier zahlreiche Einzelteile an dem Wassertank vorhanden sind, ist der gestalterische Nachteil gegeben, dass eine zum Öffnen des Deckels vorhandene Mulde oder Senke den optischen Gesamteindruck des Getränkebereiters in unerwünschter Weise beeinträchtigt. Ein weiterer, bekannter Nachteil besteht auch darin, dass die Anordnung des Deckels an der Oberseite des Wassertanks Bauraum einnimmt, der den Öffnungsquerschnitt des Wassertanks verringert, so dass dadurch die Handhabung des Wassertanks insgesamt erschwert wird.
EP 0 404 688 A1 offenbart einen Getränkebereiter mit einem Wassertank, wobei ein schwenkbarer Deckel als Handgriff verwendbar ist.
US 2010/0242740 A1 offenbart einen Getränkebereiter mit einem entnehmbaren Wassertank, der einen schwenkbaren Deckel zum Öffnen und Schließen des Wassertanks aufweist, wobei der Deckel über ein bogenförmiges Führungselement mit dem Getränkebereiter verbunden ist.
WO 2006/084819 A2 offenbart einen Behälter mit einem Deckel mit einem bogenförmigen Führungselement.
CN 202 287 829 U offenbart einen Wasserbehälter für ein Haushaltsgerät, wobei ein schwenkbarer Tragegriff an einem ebenso schwenkbaren Deckel befestigt ist.

Der Erfindung stellt sich somit das Problem, einen Getränkebereiter zur Verfügung zu stellen, der einfach zu handhaben und aus möglichst wenigen Einzelteilen aufgebaut ist, wobei insbesondere der Deckel des Wassertanks derart gestaltet sein sollte, das ein optisch ansprechender Gesamteindruck des Getränkebereiters gewahrt bleibt.

Erfindungsgemäß wird dieses Problem durch einen Getränkebereiter mit den Merkmalen des Patentanspruchs 1 gelöst.

Vorteilhafte Ausgestaltungen und Weiterbildungen der Erfindung ergeben sich aus den nachfolgenden Unteransprüchen.

Ein Getränkebereiter mit einem entnehmbar in den Getränkebereiter eingesetzten Wassertank, der einen schwenkbaren Deckel zum Öffnen und Schließen des Wassertanks aufweist, wurde erfindungsgemäß dahingehend weitergebildet, dass der Deckel über mindestens ein bogenförmiges Führungselement mit dem Wassertank verbunden ist.

Der wesentliche, mit der Erfindung erreichbare Vorteil besteht in der bogenförmigen Gestaltung des Führungselementes. Hieraus ergibt sich nämlich die Möglichkeit, den Deckel entlang des Führungselementes aus dem Wassertank herauszuziehen und ihn wie einen Tragegriff zu verwenden. Diese Maßnahme spart einen zusätzlich in dem Wassertank vorhandenen Tragegriff ein, so dass dieser in seinem Aufbau vereinfacht werden konnte und insgesamt einfacher zu handhaben ist.

Entsprechend einer ersten Ausgestaltung der Erfindung wird vorgeschlagen, dass ein am Wassertank vorhandenes Führungsglied in einer in dem Führungselement vorhandenen Führungsnut geführt ist. Entsprechend einer konstruktiv sehr einfachen Ausführung kann das Führungsglied beispielsweise eine Art Achsstumpf sein, der in der Führungsnut des Führungselement gleitend aufgenommen beziehungsweise gelagert ist.

Besonders vorteilhaft ist darüber hinaus ein Vorschlag, der darin besteht, dass das Führungsglied eine Rotationsachse für die Schwenkbarkeit des Deckels bildet. Mit anderen Worten ist der Deckel um die Rotationsachse schwenkbar und entlang der Führungsnut verschiebbar an dem Wassertank befestigt. Daraus resultiert die Möglichkeit, den Deckel mit einer ebenen Oberfläche auszustatten, die sich nicht mehr von den ihn umgebenden Verkleidungsteilen abhebt und damit insgesamt den optischen Gesamteindruck des Getränkebereiters nicht unterbricht. Der Deckel kann zunächst durch einen leichten, einseitigen Druck auf den Deckel um das als Rotationsachse ausgebildete Führungsglied verschwenkt werden, so dass auf der dem aufgebrachten Druck gegenüberliegenden Seite des Deckels ein Öffnungsquerschnitt freigegeben wird, der ausreichend ist, den Deckel von seiner Unterseite her zu ergreifen und ihn herauszuziehen, so dass anschließend der Deckel mit dem Führungselement entlang des Wassertanks verschoben werden kann. Nach dem Erreichen des unteren Anschlags des Führungselementes kann dann der gesamte Wassertank aus dem Getränkebereiter entnommen werden.

Die Verbesserung der Handhabung eines Wassertanks eines erfindungsgemäßen Getränkebereiters kann auch dadurch erreicht werden, dass das die Rotationsachse bildende Führungsglied außerhalb einer durch den Schwerpunkt des Wassertanks verlaufenden, geometrischen Vertikalebene angeordnet ist. Mit anderen Worten wird das Führungsglied außermittig am Wassertank vorgesehen, was dazu führt, dass der aus dem Getränkebereiter entnommene und an dem Deckel gehaltene Wassertank eine leichte Vorwärtsneigung aufweist, die dazu führt, dass der Öffnungsquerschnitt des Wassertanks gegenüber einer geraden Führung des Deckels vergrößert ist. Damit wird das Einfüllen frischen Wassers wesentlich erleichtert beziehungsweise das entleeren des Wassertanks vereinfacht.

Als besonders vorteilhaft hat sich hierfür insbesondere eine kreisbogenförmige Geometrie der Führungsnut herausgestellt, in die das am Wassertank vorhandene Führungsglied eingreift beziehungsweise in der dieses Führungsglied entlang gleitet, wenn der Deckel angehoben oder abgesenkt wird. Durch die Bewegung des Deckels entlang der Kreisbahn wird dieser aus dem Öffnungsquerschnitt des Wassertanks herausbewegt.

Wie eingangs bereits ausgeführt wurde, stellt es einen erheblichen Vorteil dar, dass der geöffnete und entlang der Führungsnut verschobene Deckel einen Tragegriff des Wassertanks bildet. Mit dieser Maßnahme kann nicht nur ein zusätzlicher Tragegriff am Wassertank eingespart werden, sondern es werden ferner die für die Verschwenkbarkeit des Tragegriffs erforderlichen Lagerstellen entbehrlich, so dass hiermit insgesamt eine wesentliche Vereinfachung des Wassertanks und damit des Getränkebereiters erreicht werden konnte.

Die Erleichterung des Befüllens beziehungsweise des Entleerens des Wassertanks spielt für eine verbesserte Handhabung desselben eine wesentliche Rolle. Aus diesem Grund wird vorgeschlagen, dass der Wassertank im Schwenkbereich des Deckels eine Senke aufweist, die den um das Führungsglied als Rotationsachse verschwenkten Deckel zumindest teilweise aufnimmt. In der Regel ist der Deckel nur in einer vorbestimmten Richtung verschwenkbar am Wassertank befestigt. Demzufolge ist die Senke bevorzugt an der Seite des Wassertanks vorgesehen, in die der Deckel zunächst um das Führungsglied gekippt oder verschwenkt wird, bevor er entlang der Führungsnut herausgezogen werden kann. Die Senke führt aber nicht nur dazu, dass der Deckel um das als Rotationsachse ausgeführte Führungsglied verschwenkt werden kann, ohne mit anderen Bauteilen zu kollidieren. Sie ist auch dazu geeignet, den Öffnungsquerschnitt des Wassertanks in entscheidendem Maße zu vergrößern, was die Befüllung und Entleerung des Wassertanks zusätzlich verbessert. Folgerichtig bildet die Senke einen bei entlang des Führungselementes herausgezogenem Deckel vergrößerten Öffnungsquerschnitt zum Befüllen oder Entleeren des Wassertanks.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Getränkebereiter in einer perspektivischen Ansicht,
- Figur 2:: den Getränkebereiter aus Figur 1 mit einem leicht geöffneten Deckel,
- Figur 3:: den Getränkebereiter aus Figur 2 mit einem geringfügig herausgezogenen Deckel,
- Figur 4:: einen Wassertank als Einzelteildarstellung und mit einem um das Führungsglied gekippten Deckel
und
- Figur 5:: einen Wassertank als Einzelteildarstellung, mit dem vollständig herausgezogenem Deckel einen Tragegriff.

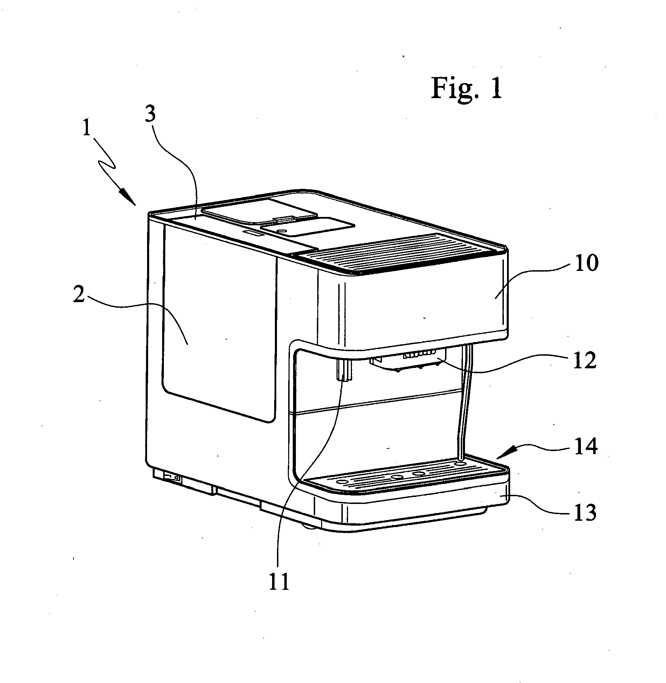

Der in der Figur 1 dargestellte Getränkebereiter 1 ist als Einzelgerät ausgeführt und folglich nicht in einen Einbauschrank integriert. Dieser Getränkebereiter 1 weist ein Gehäuse mit einem Vorsprung 10 auf, unterhalb dessen mit korrespondierenden Abmessungen ein Vorbau 13 vorhanden ist. Der Vorsprung 10 dient hierbei dazu, mehrere Entnahmeeinrichtungen sichtgeschützt aufzunehmen. Nur andeutungsweise und beispielhaft sind in der Figur 1 als Entnahmeeinrichtungen eine Brüheinheit 12 sowie eine Dampfdüse 11 gezeigt. Der Vorbau 13 weist darüber hinaus eine mit einem Abtropfblech ausgestattete Abstellfläche 14 auf, die dazu dient, darauf ein mit einem Getränk zu befüllendes Gefäß abzustellen. Das Abtropfblech der Abstellfläche 14 weist in an sich bekannter Weise mehrere Öffnungen oder Schlitze auf, die übergelaufene oder verspritzte Flüssigkeitsreste in eine unter dem Abtropfblech vorhandene Auffangschale ableiten. In eine Seitenwand des Getränkebereiters 1 ist ferner ein Wassertank 2 eingesetzt, der einen Teil dieser Seitenwand bildet und dessen Deckel 3 an der Oberseite des Getränkebereiters 1 angeordnet ist. Der Deckel 3 weist eine in der Figur 1 nicht näher bezeichnete farbliche Markierung auf, die dem Anwender anzeigt, dass der Deckel 3 durch einen Druck auf diese Markierung geöffnet werden kann.

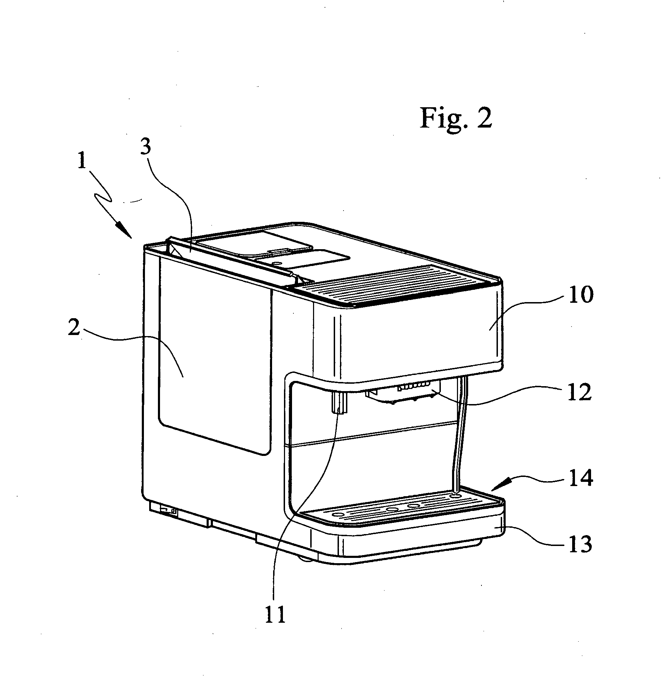

Die Figur 2 zeigt die gleiche Ansicht des Getränkebereiters 1 aus Figur 1, wobei der Deckel 3 hierbei durch einen Druck auf die Markierung in eine gekippte Stellung verschwenkt wurde. Dadurch ist es möglich, die Unterseite des Deckels 3 zu ergreifen und diesen nach oben herauszuziehen.

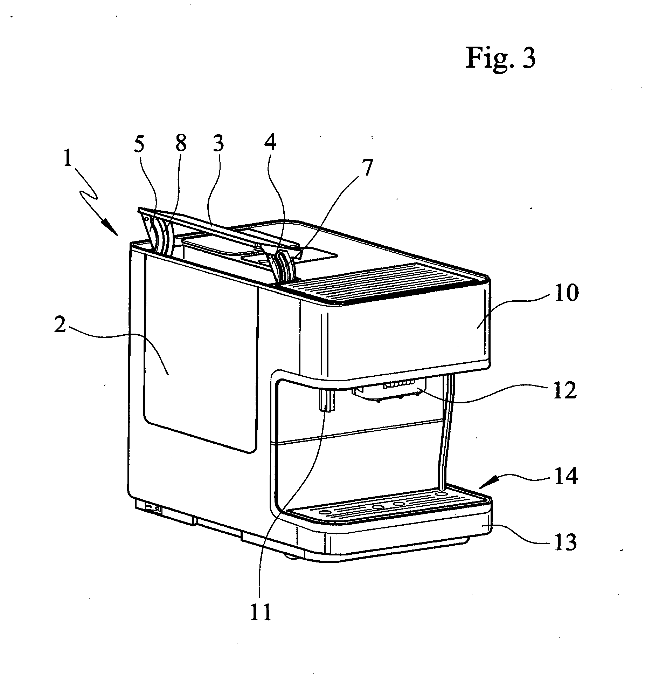

Im Zusammenhang mit der Darstellung in Figur 3 wird deutlich, wie dies bei einem Getränkebereiter 1 nach der Erfindung möglich ist. Der hier rechteckig ausgeführte Deckel 3 weist an seinen beiden Stirnseiten je ein Führungselement 4 beziehungsweise 5 auf. Die Führungselemente 4, 5 sind bei dem gezeigten Beispiel einstückig an dem aus Kunststoff bestehenden Deckel 3 angeformt und verfügen jeweils über eine Führungsnut 7 beziehungsweise 8, in die je ein korrespondierendes Führungsglied 6 eingreift, dass am Wassertank 2 angeordnet ist und auf das nachfolgend noch näher eingegangen wird.

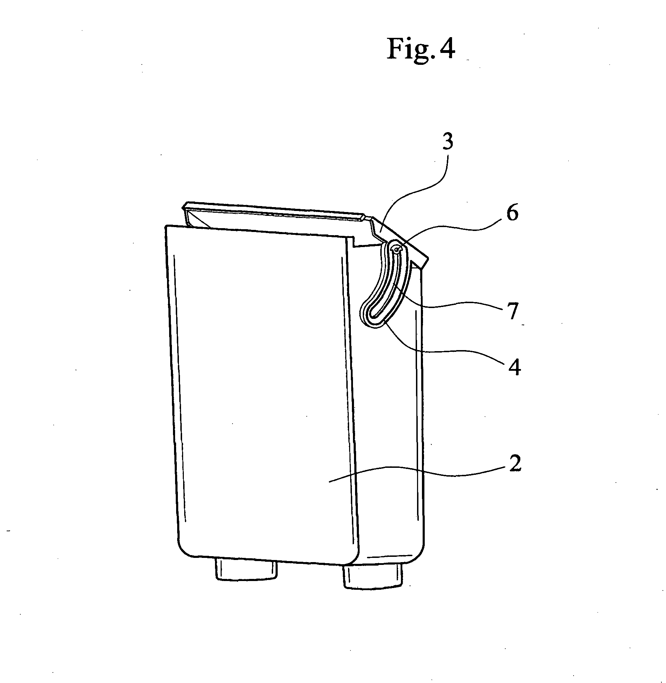

So geht aus der Figur 4 ein Wassertank 2 mit einem Deckel 3 als separierter Teilzusammenbau hervor. An dem Wassertank 2 ist auf jeder Stirnseite des im Querschnitt rechteckig gestalteten Wassertanks 2, im oberen, öffnungsseitigen Bereich ein als Achsstumpf ausgeführtes Führungsglied 6 angeordnet. Dieses Führungsglied 6 dient einerseits als Rotationsachse für den Deckel 3 und ermöglicht andererseits eine Führung des Deckels 3 innerhalb des jeweiligen Führungselementes 4, 5. Zur Führung des Führungsgliedes 6 ist das Führungselement 4 und analog hierzu auch das in der Figur 4 nicht gezeigte Führungselement 5 mit je einer Führungsnut 7 beziehungsweise 8 ausgestattet, in der das Führungsglied 6 gleitend geführt und gelagert ist. Nachdem der Deckel 3 um das als Rotationsachse dienende Führungsglied 6 verschwenkt und damit soweit geöffnet wurde, dass ein Ergreifen der Unterseite des Deckels 3 möglich ist, kann der Deckel angehoben werden, wobei das Führungsglied 6 innerhalb der Führungsnut 7, 8 entlang geführt wird. Durch die kreisbogenförmige Gestaltung der Führungsnut 7, 8 beschreibt auch der Deckel 3 einen kreisbogenförmigen Weg und wird dadurch ohne unerwünschte Berührungen mit der Gehäuseoberfläche des Getränkebereiters 1 bewegt.

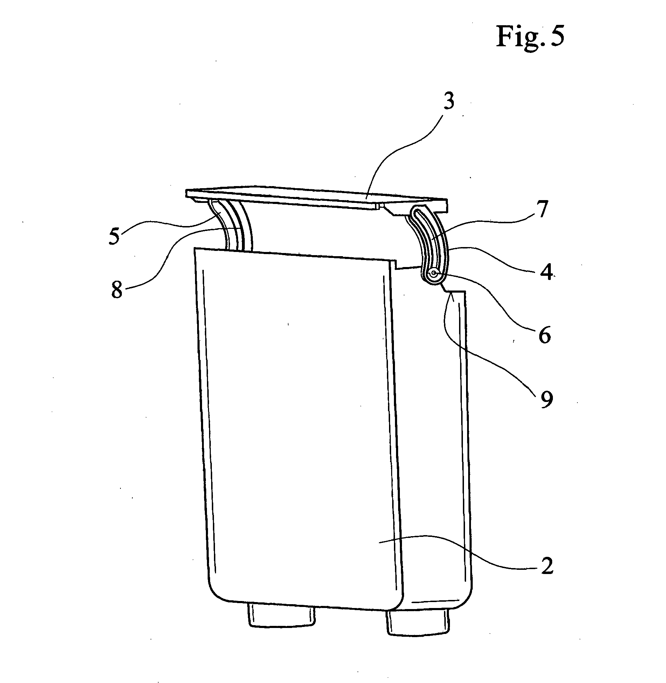

Bei Betrachtung der Figuren 4 und 5 fällt auf, dass der Wassertank 2 in seinem oberen, öffnungsseitigen Abschnitt eine abgestufte Kontur aufweist. Die Bedeutung dieser Abstufung liegt darin, einen möglichst großen Öffnungsquerschnitt zum Befüllen oder Entleeren des Wassertanks 2 bereitzustellen. Eine weitere, diesem Zweck dienende Maßnahme ist darin zu sehen, dass die durch das Führungsglied 6 gebildete Rotationsachse des Wassertanks 2 außermittig, das heißt, außerhalb einer durch den Schwerpunkt des Wasserbehälters 2 verlaufenden, geometrischen Vertikalebene angeordnet ist. Dies hat zur Folge, dass der aus dem Getränkebereiter 1 entnommene Wassertank 2 beim Halten am Deckel 3 eine leichte Neigung aufweist und damit der gesamte Öffnungsquerschnitt des Wassertanks 2 freigegeben und nicht durch den Deckel 3 verdeckt wird. Eine weiterführende Verbesserung ist darin zu sehen, dass der Wassertank 2 an seiner als Ausguss vorgesehenen Seite eine Senke 9 aufweist. Diese Senke hat darüber hinaus den Vorteil, dass der um das Führungsglied 6 verschwenkte Deckel 3 in diese Senke 9 eintauchen kann. Somit trägt die Senke 9 auch dazu bei, einen ebenen Abschluss des Deckels 3 mit den ihn aufnehmenden Verkleidungsteilen zu ermöglichen, da der Deckel keine Eingriffsmulde oder Erhebungen benötigt, die sein Anheben erlauben.

### BEZUGSZEICHENLISTE:

- 1: Getränkebereiter
- 2: Wassertank
- 3: Deckel
- 4: Führungselement
- 5: Führungselement
- 6: Führungsglied
- 7: Führungsnut
- 8: Führungsnut
- 9: Senke
- 10: Vorsprung
- 11: Dampfdüse
- 12: Brüheinheit
- 13: Vorbau
- 14: Abstellfläche mit Abtropfblech

## Patentansprüche

1. Getränkebereiter (1) mit einem entnehmbar in den Getränkebereiter (1) eingesetzten Wassertank (2), der einen schwenkbaren Deckel (3) zum Öffnen und Schließen des Wassertanks (2) aufweist,
**dadurch gekennzeichnet, dass**
der Deckel (3) über mindestens ein bogenförmiges Führungselement (4, 5) mit dem Wassertank (2) verbunden ist, um den Deckel entlang des Führungselementes (4, 5) aus dem Wassertank (2) herauszuziehen und ihn wie einen Tragegriff zu verwenden.

2. Getränkebereiter nach Anspruch 1,
**dadurch gekennzeichnet, dass**
ein am Wassertank (2) vorhandenes Führungsglied (6) in einer in dem Führungselement (4, 5) vorhandenen Führungsnut (7, 8) geführt ist.

3. Getränkebereiter nach Anspruch 2,
**dadurch gekennzeichnet, dass**
das Führungsglied (6) eine Rotationsachse für die Schwenkbarkeit des Deckels (3) bildet.

4. Getränkebereiter nach Anspruch 3,
**dadurch gekennzeichnet, dass**
der Deckel (3) um die Rotationsachse schwenkbar und entlang der Führungsnut (7, 8) verschiebar an dem Wassertank (2) befestigt ist.

5. Getränkebereiter nach einem der Ansprüche 3 oder 4,
**dadurch gekennzeichnet, dass**
das die Rotationsachse bildende Führungsglied (6) außerhalb einer durch den Schwerpunkt des Wassertanks (2) verlaufenden, geometrischen Vertikalebene angeordnet ist.

6. Getränkebereiter nach einem der Ansprüche 2 bis 5,
**dadurch gekennzeichnet, dass**
die das am Wassertank (2) vorhandene Führungsglied (6) führende Führungsnut (7, 8) eine annähernd kreisbogenförmige Geometrie aufweist.

7. Getränkebereiter nach einem der Ansprüche 2 bis 6,
**dadurch gekennzeichnet, dass**
der geöffnete und entlang der Führungsnut (7, 8) verschobene Deckel (3) einen Tragegriff des Wassertanks (2) bildet.

8. Getränkebereiter nach einem der vorstehend genannten Ansprüche,
**dadurch gekennzeichnet, dass**
der Wassertank (2) im Schwenkbereich des Deckels (3) eine Senke (9) aufweist, die den um das Führungsglied (6) als Rotationsachse verschwenkten Deckel (3) zumindest teilweise aufnimmt.

9. Getränkebereiter nach Anspruch 8,
**dadurch gekennzeichnet, dass**
die Senke (9) einen bei entlang des Führungselementes (4, 5) herausgezogenem Deckel (3) vergrößerten Öffnungsquerschnitt zum Befüllen oder Entleeren des Wassertanks (2) bildet.

## Claims

1. Beverage maker (1) comprising a removable water tank (2) that is inserted into the beverage maker (1) and that has a pivotable lid (3) for opening and closing the water tank (2), **characterised in that**
the lid (3) is connected to the water tank (2) by means of at least one arc-shaped guide element (4, 5) for the purpose of pulling the lid out of the water tank (2) along the guide element (4, 5) and using it as a carrying handle.

2. Beverage maker according to claim 1,
**characterised in that**
a guide member (6) on the water tank (2) is guided in a guiding groove (7, 8) in the guide element (4, 5).

3. Beverage maker according to claim 2,
**characterised in that**
the guide member (6) forms a rotational axis that allows the lid (3) to pivot.

4. Beverage maker according to claim 3,
**characterised in that**
the lid (3) is attached to the water tank (2) in such a way that it can pivot about the rotational axis and can move along the guiding groove (7, 8).

5. Beverage maker according to either claim 3 or claim 4,
**characterised in that**
the guide member (6) that forms the rotational axis is arranged outside of a geometric vertical plane that passes through the centre of gravity of the water tank (2).

6. Beverage maker according to any of claims 2 to 5,
**characterised in that**
the guiding groove (7, 8) that guides the guide member (6) that is on the water tank (2) is approximately circular-arc-shaped.

7. Beverage maker according to any of claims 2 to 6,
**characterised in that**
the open lid (3) that has been moved along the guiding groove (7, 8) forms a carrying handle for the water tank (2).

8. Beverage maker according to any of the preceding claims,
**characterised in that**
the water tank (2) has a depression (9) in the region in which the lid (3) pivots, which depression at least in part accommodates the lid (3) that is pivoted about the guide member (6) acting as a rotational axis.

9. Beverage maker according to claim 8,
**characterised in that**
the depression (9) forms an enlarged opening cross section for filling or emptying the water tank (2) when the lid (3) has been pulled out along the guide element (4, 5).

## Revendications

1. Préparateur de boissons (1) avec un réservoir d'eau (2), mis en place de façon amovible dans le préparateur de boissons (1), qui présente un couvercle (3) pivotant pour l'ouverture et la fermeture du réservoir d'eau (2),
**caractérisé en ce que**
le couvercle (3) est raccordé au réservoir d'eau (2) par le biais d'au moins un élément de guidage (4, 5) arqué afin d'extraire du réservoir d'eau (2) le couvercle le long de l'élément de guidage (4, 5) et l'utiliser comme poignée de transport.

2. Préparateur de boissons selon la revendication 1,
**caractérisé en ce**
**qu'**un organe de guidage (6) présent sur le réservoir d'eau (2) est guidé dans une rainure de guidage (7, 8) présente dans l'élément de guidage (4, 5).

3. Préparateur de boissons selon la revendication 2,
**caractérisé en ce**
**que** l'organe de guidage (6) forme un axe de rotation pour l'aptitude au pivotement du couvercle (3).

4. Préparateur de boissons selon la revendication 3,
**caractérisé en ce que**
le couvercle (3) est fixé sur le réservoir d'eau (2) de façon à pouvoir pivoter autour de l'axe de rotation et à coulisser le long de la rainure de guidage (7, 8).

5. Préparateur de boissons selon l'une des revendications 3 ou 4,
**caractérisé en ce que**
l'organe de guidage (6) formant l'axe de rotation est disposé à l'extérieur d'un plan vertical géométrique passant à travers le centre de gravité du réservoir d'eau (2).

6. Préparateur de boissons selon l'une des revendications 2 à 5,
**caractérisé en ce que**
la rainure de guidage (7, 8) guidant l'organe de guidage (6) présent sur le réservoir d'eau (2) présente une géométrie approximativement en forme d'arc de cercle.

7. Préparateur de boissons selon l'une des revendications 2 à 6,
**caractérisé en ce que**
le couvercle (3) ouvert et ayant coulissé le long de la rainure de guidage (7, 8) forme une poignée de transport du réservoir d'eau (2).

8. Préparateur de boissons selon l'une des revendications citées précédemment,
**caractérisé en ce que**,
dans la zone de pivotement du couvercle (3), le réservoir d'eau (2) présente une dépression (9) qui loge au moins partiellement le couvercle (3) qui est pivoté autour de l'organe de guidage (6) en tant qu'axe de rotation.

9. Préparateur de boissons selon la revendication 8,
**caractérisé en ce que**
la dépression (9) forme, pour le remplissage ou le vidage du réservoir d'eau (2), une section transversale d'ouverture agrandie quand le couvercle (3) est extrait le long de l'élément de guidage (4, 5).
